# EUROPEAN PATENT SPECIFICATION

(11) **EP 0 309 148 B1**
(45) Date of publication and mention of the grant of the patent: **06.09.1995**
(21) Application number: 88308515.1
(22) Date of filing: 15.09.1988
(51) Int. Cl.: B24D 18/00, B23K 26/00, B41J 2/005

(54) **Multi-disc cutter and method of manufacture**
Mehrscheiben-Schleifwerkzeug und Herstellungsverfahren
Couteau multidisque et procédé de fabrication

(30) Priority: 19.09.1987 GB 8722087
(43) Date of publication of application: 29.03.1989
(73) Proprietor: XAAR LIMITED, Cambridge CB4 4FD (GB)
(72) Inventor: Shepherd, Mark Richard, Royston Hertfordshire (GB)
(74) Representative: Cropp, John Anthony David

(56) References cited:
- GB-A- 2 113 583
- US-A- 4 151 685
- US-A- 4 170 726
- US-A- 4 329 564
- IBM TECHNICAL DISCLOSURE BULLETIN, vol. 19, no. 4, September 1976, pages 1471-1472, Armonk, New-York, US ; J.P. HOEKSTRA : "Fabrication of slotted charge structures for ink jet printing".

## Description

The present invention relates generally to the manufacture of ink jet printheads IBM Technical Bulletin, Volume 19, No. 4, 4th September 1976, pages 1471-1472, discloses that a charge electrode structure for an ink jet printer can be fabricated by sawing slots in a suitable insulating material and then metallising. EP-A-0 277 703 and EP-A-0 278 590 (published after the priority date of this application) both disclose ink jet printheads having a plurality of linear, parallel ink cavities or channels formed in pre-poled piezoelectric ceramic. In order to provide a printhead having the desired operating characteristics and print resolution, the dimensions of the ink cavities are quite small and their tolerances must be precisely controlled. A typical printhead may, for example, have ink cavities which are about 30-200 microns wide by 150-1000 microns deep and a cavity pitch of about 75-500 microns. Due to the linear cutting speeds achievable, the possibility of channel depth profiling and the manufacturing tolerances required, the use of diamond cutting tools is presently preferred by the present Applicants to form the ink cavities. While a number of such tools are currently available, there is a need for a more efficient tool, which is suitable for use in forming ink cavities particularly for use in a mass production environment.

A known prior art technique of forming tools of various configurations is that of laser ablation. For example, U.S. Patent 4,533,812 teaches the use of a laser to shape a diamond grinding disc and U.S. Patent 4,170,726 teaches the use of a laser to form a workpiece by melting selected areas of the workpiece and then removing the resulting melt. None of the known prior art techniques, however, is considered satisfactory for the purpose of forming diamond cutting tools suitable for use in the mass production of ink jet printheads, especially printheads having ink cavities with the precisely controlled and extremely fine dimensions described above.

It is therefore a basic object of the present invention to provide an improved method of forming of forming a plurality of ink cavities in an ink jet printer printhead.

It is a more specific object of the invention to provide an improved method especially adapted for mass production of ink jet printheads.

It is yet a further object of the invention to provide an improved method for efficiently forming a plurality of linear, parallel ink cavities having extremely small and precisely controlled dimensions in a piezoelectric ceramic ink jet printhead.

The above objects are achieved by a method and a tool according to claims 1, 6 and 13 respectively. The dependent claims describe advantageous embodiments of the invention.

Accordingly, the present invention consists in a method of forming a pluality of ink cavities in an ink jet printer printhead, comprising the steps of providing a piezoeletric substrate; positioning an abrasive cutting tool adjacent a surface of said substrate, said cutting tool comprising a plurality of spaced abrasive cutting discs each having a width corresponding to the width of said ink cavities and a height exceeding the cavity depth; rotating said cutting tool at a relatively high speed; and translating the cutting tool and substrate relative to each other so as to cut a plurality of parallel, spaced elongate ink cavities in said substrate.

These and other objects and advantages of the invention will be apparent upon reading the following description in conjunction with the drawings, in which:-
FIG. 1 is a side elevation view of a multi-disc cutter formed according to the methods of the present invention;
FIG. 2 illustrates a method of using the cutter of FIG. 1 to form a plurality of ink cavities in the piesoelectric substrate of an ink jet printhead;
FIG. 3 illustrates one method of forming the multi-disc cutter of FIG. 1 according to the present invention;
FIG. 4 illustrates a second method of forming the multi-disc cutter of FIG. 1 according to the present invention; and;
FIGS. 5A and 5B are enlarged views illustrating the cutting disc profiles of two multi-disc cutters manufactured according to the present invention.

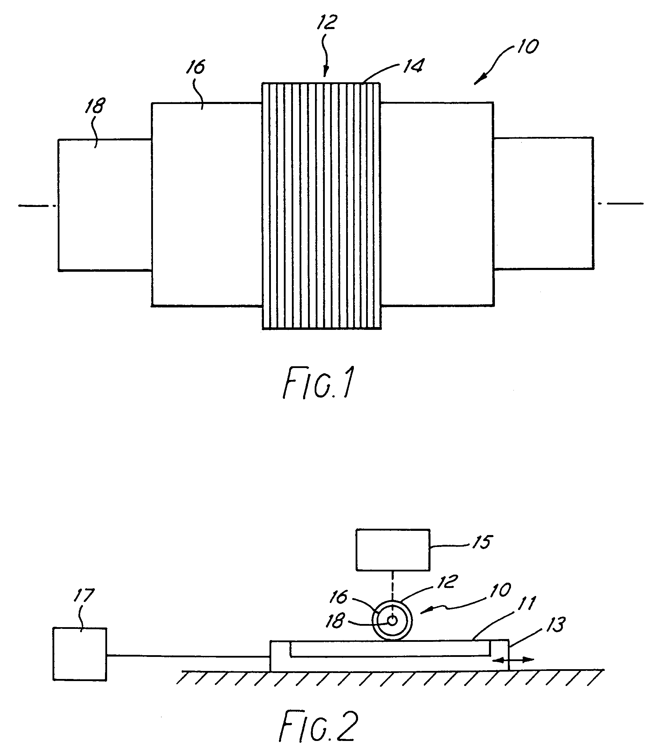

A multi-disc cutter 10 manufactured according to the present invention is illustrated in FIG 1. The cutter 10 includes an annular cutting head 12 comprising a plurality of spaced abrasive cutting discs or ridges 14, which may be equally or unequally spaced as desired. As will be explained in further detail hereinafter, discs 14 comprise a mixture of diamond powder and resin. Annular cutting head 14 is coaxially mounted for rotation on a steel cylinder 16 which, in turn, is coaxially mounted for rotation on a shaft 18.

Multi-disc cutter 10 is particularly useful in connection with the manufacture of ink jet printheads of the type described in the above-mentioned copending applications. These printheads comprise a pre-poled piezoelectric ceramic having a plurality of linear, parallel ink cavities or channels formed therein. The cavity dimensions, whose tolerances must be very precisely controlled, are typically on the order of 30-200 microns wide by 150-1000 microns deep with a cavity separation pitch of about 75-500 microns. The abrasive discs 14 of cutting head 12 are correspondingly dimensioned and, in particular, preferably have a height H somewhat exceeding the cavity depth, a width W corresponding to the width of the cavities of the printhead and a pitch P equal to or comprising a multiple of the cavity pitch. Discs 14 may also be formed with an unequal pitch when required to produce ink channels characterized by an unequal pitch. The number of discs 14 on the cutting head 12 is preferably binary to facilitate the cutting of ink cavities in the piezoelectric ceramic to match the electronic drive chips which are normally provided with drive connections that are also binary.

As shown in FIG. 2, cutter 10 is used to cut the ink cavities in a sheet of piezoelectric ceramic 11 by mounting the ceramic substrate in a suitable machining jig 13, rotating the cutter by means of shaft 18 at a high speed in the manner of a dicing blade and translating the cutter longitudinally along the length of the ceramic. Rotation and translation of the cutter may be effected by a control system 15. A plurality of linear, parallel cavities are thereby formed in the ceramic. A suitable cutting fluid may, of course, be used to facilitate the cutting process. Alternatively, the piezoelectric ceramic may be longitudinally translated relative to the rotating cutter by a control system 17 to form the cavities. In either case, the longitudinal translation is preferably performed in a step-wise manner and, depending on the pitch P of discs 14, multiple passes (two to four for example) may be required to cut the cavities to the selected design pitch). Also, the cutter discs 14 may be optically inspected from time to time during cutting to maintain precise location of the cutter relative to the piezoelectric ceramic and to identify wear or breakage of cutter discs.

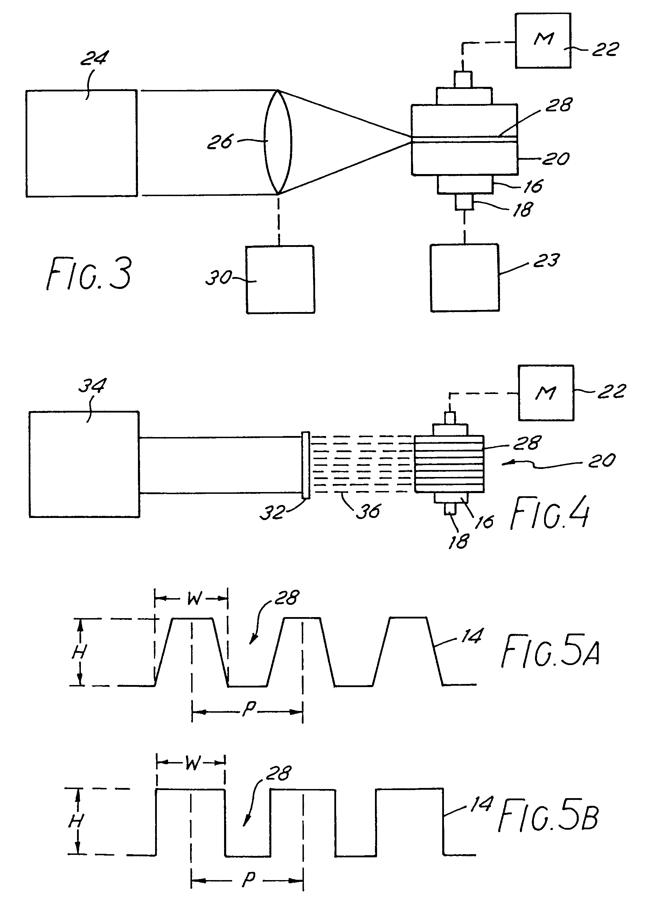

One method of forming the cutter 10 of the invention is illustrated in FIG. 3. A portion of cylinder 16 is initially uniformly coated with a mixture 20 of diamond powder and resin to a depth exceeding the desired height H of discs 14. Mixture 20 may comprise an epoxy resin filled with diamond particles having a size of about 0.1-2.0 microns. This composition provides for good bonding of mixture 20 to steel cylinder 16 and also exhibits excellent abrasive characteristics due to the presence of the diamond powder. At the same time, the mixture has a relatively low ablation threshold due to the resin binder. That is, the energy required to ablate the resin is substantially lower than that required for ablation of the diamond powder. Shaft 18, mounted in suitable bearings, is coupled to a motor 22 for rotating cylinder 16 and mixture 20 bonded thereto while the coating is exposed to pulsed laser energy of an ultraviolet wavelength. The laser energy is supplied by a laser source 24, preferably a pulsed excimer laser, and focused on to the coating 20 by a lens system 26 at an intensity (eg 0.1-0.2 Jcm² per pulse) suitable for ablating the resin to form an annular depression 28 of selected depth and width circumscribing steel cylinder 16. The diamond powder, while not being ablated because of its higher ablation threshold (about 10-20 Jcm² per pulse) will, of course, also be removed since it is held in mixture by the resin. The annular depression 28 so formed may extend to the surface of cylinder 16 but, preferably the ablation process is terminated prior to reaching the cylinder surface.

Conventional pulsed laser sources can conveniently ablate about one micron of the diamond powder-resin mixture per pulse thereby requiring multiple pulse cycles to achieve the desired depth of depression 28. The assembly comprising cylinder 16, shaft 18 and mixture 20 is preferably displaced in steps along its longitudinal axis by a positioner 23 so that a plurality of depressions 28 are formed in coating 20. Alternately, lens 26 may be associated with a suitable control mechanism 30 to progressively displace the focused laser beam in equal steps along the longitudinal axis of cylinder 16. During each step an annular depression 28 is formed by ablation of the coating so that upon completion of the process, a plurality of such depressions are provided, the depressions being equally spaced along the longitudinal axis of cylinder 16.

FIG. 4 illustrates another method of forming the cutter 10 illustrated in FIG. 1. This method is generally similar to the method shown in FIG. 2 except that a number of depressions 28 are formed simultaneously. In this case, a suitable mask 32 having a plurality of collimating apertures is flooded with laser energy from a source 34. A plurality of collimated laser beams 36 are thereby simultaneously applied to the rotating coating 20. Each beam 36 forms a respective annular depression 28 by ablating the resin from the diamond powder-resin mixture to simultaneously create a plurality of equally spaced annular, abrasive cutting discs 14. The mask 32 may be configured to form all of the depressions 28 at one time or may be stepped to form the depressions in successive groups.

Using either of the techniques illustrated in FIGS 3 or 4, it will be understood that an abrasive cutting disc 14 comprising the unablated diamond powder-resin mixture is formed intermediate each successive pair of depressions 28. The height H, width W and pitch P of cutting discs 14 may be precisely controlled by appropriately applying selectively focused and stepped laser energy in the formation of depressions 28. Laser systems for achieving a high degree of accuracy in forming depressions 28 are well known in the art.

In one embodiment of the invention illustrated in FIG. 5A, the discs 14 exhibit a tapered profile, being narrower at the tip and wider at the base of the cutting head. The amount of taper shown in the drawing is somewhat exaggerated for purposes of illustration, normally being on the order of about 10 degrees. As explained in the aforementioned copending applications, the formation of ink cavities with a corresponding taper is considered advantageous in some situations. The taper characterizing discs 14 is, of course, the result of the reverse taper exhibited by depressions 28. This reverse taper is an inherent characteristic of the ablation process used in forming cutting head 12. In particular, the steepness of the walls defining depressions 28 is a function of the energy used in the ablation process, the application of more intense energy resulting in steeper more vertical walls and the application of less energy resulting in walls having a more gradual slope. Thus, by appropriately selecting the applied ablating energy, cutting discs 14 of a desired taper can be conveniently provided.

While, as indicated above, it is sometimes advantageous to provide ink channels with tapered walls, the channels are normally required to be rectangular. In order to cut such rectangular ink channels, the cutting discs 14 must also have a rectangular profile as illustrated in FIG. 5B. This can be effected by introducing a relative rocking motion between the cutter and laser beam during the ablation process. This relative rocking motion tends to undercut the depressions 28 to eliminate the taper that would otherwise be established. For example, referring to FIG. 3, the cutter assembly can be rocked about its longitudinal axis by positioner 23 while maintaining the laser optics stationary to eliminate the taper or, alternatively, means capable of rocking the optical beam may be provided.

## Claims

1. A method of forming a plurality of ink cavities in an ink jet printer printhead, comprising the steps of providing a piezoelectric substrate (11); positioning an abrasive cutting tool (10) adjacent a surface of said substrate (11), said cutting tool (10) comprising a plurality of spaced abrasive cutting discs (14) each having a width corresponding to the width of said ink cavities and a height exceeding the cavity depth; rotating said cutting tool (10) at a relatively high speed; and translating the cutting tool (10) and substrate relative to each other so as to cut a plurality of parallel, spaced elongate ink cavities in said substrate (11).

2. A method according to Claim 1, wherein the pitch of the spaced abrasive cutting discs (14) is a multiple of the pitch of the ink cavities to be formed in the printhead and wherein the cutting tool (10) and substrate (11) are translated relative to each other in multiple passes.

3. A method according to Claim 1 or Claim 2, wherein the abrasive cutting tool (10) comprises a cylindrical holder (16) having thereon an abrasive coating (20), there being a plurality of spaced annular depressions (28) in said abrasive coating, each pair of successive depressions (28) defining therebetween one of the said abrasive cutting discs (14).

4. A method according to Claim 3, wherein said depressions (28) are formed at a pitch corresponding to a cavity pitch of from 75 to 500 microns with a number of cutting passes multiple of from 1 to 4.

5. A method according to Claim 3 or Claim 4, wherein said abrasive coating (20) comprises a mixture of diamond powder and resin.

6. A method of forming a plurality of ink cavities in an ink jet printer printhead, comprising the steps of uniformly coating at least a portion of a cylindrical holder (16) with a mixture of diamond powder and resin; rotating said cylindrical holder (16) about its longitudinal axis; exposing the rotating coating to an optical beam having an energy level less than the ablation threshold of said diamond powder and adapted for ablating the resin in said mixture so as to form a plurality of spaced annular depressions (28) in said coating, each pair of successive depressions (28) defining therebetween an abrasive cutting disc (14); providing a piezoelectric substrate (11); positioning the cylindrical holder (16) with said abrasive cutting discs (14) adjacent a surface of said substrate (11); rotating said cylindrical holder (16) at a relatively high speed; and translating the holder (16) and substrate (11) relative to each other so as to cut through the action of said abrasive cutting discs (14) a plurality of parallel, spaced elongate ink cavities in said substrate.

7. A method according to Claim 6, wherein said exposing step comprises exposing said coating (20) to a high energy beam for forming each of said annular depressions (28) with a predetermined tapered profile such that each of said cutting discs (14) is characterized by a tapered profile reverse that of said-predetermined profile.

8. A method according to Claim 7, including the step of effecting relative rocking motion between said cylindrical holder (16) and said optical beam so as to form each of said annular depressions (28) with a substantially rectangular profile, whereby each of said cutting discs (14) is also characterized by a substantially rectangular profile.

9. A method according to any one of Claims 6 to 8, wherein said coating step comprises coating at least a portion of said cylindrical holder (16) with said mixture to a depth exceeding the depth of said annular depressions (28) formed therein.

10. A method according to any one of Claims 6 to 9, wherein said exposing step comprises displacing said optical beam and said cylindrical holder (16) relative to each other in a plurality of steps along the longitudinal axis of said holder to form said plurality of annular depressions (28).

11. A method according to any one of Claims 6 to 9, wherein said exposing step comprises simultaneously ablating said resin with a plurality of high energy laser beams (36) spaced along the longitudinal axis of said cylindrical holder (16) to form said plurality of annular depressions (28).

12. A method according to any one of Claims 6 to 11, including employing an excimer laser as said optical beam.

13. An abrasive cutting tool (10) for use in forming a plurality of ink cavities in an ink jet printer, in a method according to any one of the preceding claims, the cutting tool (10) comprising a cylindrical holder (16) having an abrasive coating (20) thereon, there being a plurality of spaced annular depressions (28) in said abrasive coating (20) with each pair of successive depressions defining therebetween an abrasive cutting disc (14) having a width corresponding to the width of said ink cavities and the height exceeding the cavity depth.

14. A tool according to Claim 13, wherein the pitch of said cutting discs (14) corresponds to a cavity pitch of from 75 to 500 microns with a number of cutting passes multiple of from 1 to 4.

15. A tool according to Claim 13 or Claim 14, wherein said abrasive coating (20) comprises a mixture of diamond powder and resin.

## Patentansprüche

1. Verfahren zur Ausbildung einer Anzahl von Tintenhohlräumen bzw. Druckfarbenhohlräumen in einem Tintenstrahldrucker-Druckkopf, das folgende Schritte aufweist: ein piezoelektrisches Trägermaterial (11) wird bereitgestellt; ein abschleifendes Schneidwerkzeug (10) wird benachbart zu einer Oberfläche des Trägermaterials (11) positioniert, wobei das Schneidwerkzeug (10) eine Anzahl beabstandeter, abschleifender Schneidscheiben (14) umfaßt, von denen jede eine Breite, die der Breite der Tinten- bzw. Druckfarbenhohlräume entspricht, und eine Höhe aufweist, die die Tiefe des Hohlraums übertrifft; das Schneidwerkzeug (10) wird mit einer relativ hohen Geschwindigkeit gedreht bzw. rotiert; und das Schneidwerkzeug (10) und das Trägermaterial werden relativ zueinander verschoben, um so eine Anzahl paralleler, beabstandeter länglicher Tinten- bzw. Druckerfarbenhohlräume in das Trägermaterial (11) zu schneiden.

2. Verfahren gemäß Anspruch 1, bei welchem die Teilung bzw. Beabstandung der beabstandeten, abschleifenden Schneidscheiben (14) ein Mehrfaches der Teilung bzw. Beabstandung der Tinten- bzw. Druckerfarbenhohlräume beträgt, die in dem Druckkopf ausgebildet werden sollen und bei welchem das Schneidwerkzeug (10) und das Trägermaterial (11) relativ zueinander in mehrfachen Durchgängen verschoben werden.

3. Verfahren gemäß Anspruch 1 oder 2, bei welchem das abschleifende Schneidwerkzeug (10) einen zylindrischen Halter (16) umfaßt, der darauf einen abschleifenden Überzug (20) aufweist, wobei in dem abschleifenden Überzug sich eine Anzahl beabstandeter ringförmiger Vertiefungen (28) befindet, wobei jedes Paar aufeinanderfolgender Vertiefungen (28) dazwischen eine der abschleifenden Schneidscheiben (14) festlegt.

4. Verfahren gemäß Anspruch 3, bei welchem die Vertiefungen (28) mit einer Teilung bzw. Beabstandung ausgebildet sind, die einer Hohlraumteilung bzw. -beabstandung von 75 bis 500 »m entspricht, und zwar bei einer Anzahl von Schneiddurchgängen, die ein Vielfaches von 1 bis 4 sind.

5. Verfahren gemäß Anspruch 3 oder Anspruch 4, bei welchem der abschleifende Überzug (20) eine Mischung aus Diamantenpulver und Harz aufweist.

6. Verfahren zur Ausbildung einer Anzahl von Tinten- bzw. Druckerfarbenhohlräumen in einem Tintenstrahldrucker-Druckkopf, das folgende Schritte umfaßt: wenigstens ein Abschnitt eines zylindrischen Halters (16) wird gleichmäßig mit einer Mischung aus Diamantenpulver und Harz überzogen; der zylindrische Halter (16) wird um seine Längsachse gedreht; der sich drehende bzw. rotierende Überzug wird einem optischen Strahl ausgesetzt, der einen Energiepegel aufweist, der geringer ist als die Ablations- bzw. Abschmelzschwelle des Diamantenpulvers und der daran angepaßt ist, das Harz in der Mischung zu ablatieren bzw. abzuschmelzen, um so eine Anzahl beabstandeter ringförmiger Vertiefungen (28) in dem Überzug auszubilden, wobei jedes Paar aufeinanderfolgende Vertiefungen (28), dazwischen eine abschleifende Schneidscheibe (14) festlegt; ein piezoelektrisches Substrat (11) wird bereitgestellt; der zylindrische Halter (16) wird positioniert, wobei die abschleifenden Schneidscheiben (14) zu einer Oberfläche des Trägermaterials (11) benachbart sind; der zylindrische Halter (16) wird bei einer relativ hohen Geschwindigkeit gedreht; und der Kalter (16) und das Trägermaterial (11) werden relativ zueinander verschoben, um so durch die Wirkung der abschleifenden Schneidscheiben (14) eine Anzahl paralleler, beabstandeter, länglicher Tinten- bzw. Druckerfarbenhohlräume in das Trägermaterial zu schneiden.

7. Verfahren gemäß Anspruch 6, bei welchem der Schritt des Aussetzens umfaßt, daß der Überzug (20) einem Strahl hoher Energie ausgesetzt wird, um jede der ringförmigen Vertiefungen (28) mit einem vorbestimmten konischen bzw. zugespitzten Profil auszubilden, so daß jede der Schneidscheiben (14) durch ein konisches bzw. zugespitztes Profil gekennzeichnet ist, das bezüglich des vorbestimmten Profils gerade andersherum (revers) ist.

8. Verfahren gemäß Anspruch 7, das den Schritt umfaßt, wonach eine relative Hin- und Herbewegung zwischen dem zylindrischen Kalter (16) und dem optischen Strahl ausgeführt wird, um so jede der ringförmigen Vertiefungen (28) mit einem im wesentlichen rechteckigen Profil auszubilden, wodurch jede der Schneidscheiben (14) ebenso durch ein im wesentlichen rechteckiges Profil gekennzeichnet ist.

9. Verfahren gemäß irgendeinem der Ansprüche 6 bis 8, bei welchem der Schritt des Überzugs umfaßt, daß wenigstens ein Abschnitt des zylindrischen Halters (16) mit der Mischung bis zu einer Tiefe überzogen wird, die die Tiefe der ringförmigen Vertiefungen (28), die darin ausgebildet werden, übertrifft.

10. Verfahren gemäß irgendeinem der Ansprüche 6 bis 9, bei welchem der Schritt des Aussetzens umfaßt, daß der optische Strahl und der zylindrische Kalter (16) relativ zueinander in einer Anzahl von Schritten entlang der Längsachse des Halters versetzt werden, um die Anzahl der ringförmigen Vertiefungen (28) auszubilden.

11. Verfahren gemäß irgendeinem der Ansprüche 6 bis 9, bei welchem der Schritt des Aussetzens umfaßt, daß gleichzeitig das Harz mit einer Anzahl von Hochenergie-Laserstrahlen (36) ablatiert bzw. abgeschmolzen wird, die entlang der Längsachse des zylindrischen Halters (16) beabstandet sind, um eine Anzahl ringförmiger Vertiefungen (28) auszubilden.

12. Verfahren gemäß irgendeinem der Ansprüche 6 bis 11, das die Verwendung eines Exzimerlasers als optischen Strahl umfaßt.

13. Abschleifendes Schneidwerkzeug (10) zur Verwendung beim Ausbilden einer Anzahl von Tinten- bzw. Druckerfarbenhohlräumen in einem Tintenstrahldrucker, in einem Verfahren gemäß irgendeinem der vorhergehenden Ansprüche, wobei das Schneidwerkzeug (10) einen zylindrischen Halter (16) umfaßt, der darauf einen abschleifenden Überzug (20) aufweist, wobei sich eine Anzahl beabstandeter ringförmiger Vertiefungen (28) in dem abschleifenden Überzug (20) befinden, wobei jedes Paar aufeinanderfolgender Vertiefungen dazwischen eine abschleifende Schneidscheibe (14) festlegt, die eine Breite, die der Breite der Tinten- bzw. Druckerfarbenhohlräume entspricht, aufweist, und deren Höhe, die die Hohlraumtiefe übertrifft.

14. Werkzeug gemäß Anspruch 13, bei welchem die Teilung bzw. Beabstandung der Schneidscheiben (14) einer Hohlraumteilung bzw. -beabstandung von 75 bis 500 »m entspricht, und zwar bei einer Anzahl von Schneiddurchgängen, die ein Vielfaches von 1 bis 4 sind.

15. Werkzeug gemäß Anspruch 13 oder Anspruch 14, bei welchem der abschleifende Überzug (20) eine Mischung aus Diamantenpulver und Harz umfaßt.

## Revendications

1. Procédé de formation d'une pluralité de cavités d'encre dans une tête d'impression d'imprimante à jet d'encre, comprenant les étapes de fourniture d'un substrat piézo-électrique (11) ; de positionnement d'un outil de coupe abrasif (10) à côté d'une surface dudit substrat (11), ledit outil de coupe (10) comprenant une pluralité de disques de coupe abrasifs espacés (14), ayant chacun une largeur correspondant à la largeur desdites cavités d'encre et une hauteur dépassant la profondeur de cavité ; de rotation dudit outil de coupe (10) à une vitesse relativement élevée ; et de translation de l'outil de coupe (10) et du substrat l'un par rapport à l'autre de façon à découper une pluralité de cavités d'encre allongées, espacées, parallèles dans ledit substrat (11).

2. Procédé selon la revendication 1, dans lequel le pas des disques de coupe abrasifs espacés (14) est un multiple du pas des cavités d'encre à former dans la tête d'impression, et dans lequel l'outil de coupe (10) et le substrat (11) subissent un mouvement de translation l'un par rapport à l'autre selon des passes multiples.

3. Procédé selon la revendication 1 ou la revendication 2, dans lequel ledit outil de coupe abrasif (10) comprend un dispositif de support cylindrique (16) recouvert d'un revêtement abrasif (20), une pluralité de gorges annulaires espacées (28) existant dans ledit revêtement abrasif, chaque paire de gorges successives (28) définissant entre elles l'un desdits disques de coupe abrasifs (14).

4. Procédé selon la revendication 3, dans lequel lesdites gorges (28) sont formées à un pas correspondant à un pas de cavité de 75 à 500 microns avec un certain nombre de passes de coupe multiple de 1 à 4.

5. Procédé selon la revendication 3 ou la revendication 4, dans lequel ledit revêtement abrasif (20) comprend un mélange de résine et de poudre de diamant.

6. Procédé de formation d'une pluralité de cavités d'encre dans une tête d'impression d'imprimante à jet d'encre, comprenant les étapes de revêtement, de façon uniforme, d'au moins une partie du dispositif de support cylindrique (16) avec un mélange de résine et de poudre de diamant ; de rotation dudit dispositif de support cylindrique (16) autour de son axe longitudinal ; d'exposition du revêtement tournant à un faisceau optique ayant un niveau d'énergie inférieur au seuil d'érosion de ladite poudre de diamant et conçu pour éroder la résine dans ledit mélange de façon à former une pluralité de gorges annulaires espacées (28) dans ledit revêtement, chaque paire de gorges successives (28) définissant, entre elles, un disque de coupe abrasif (14) ; de fourniture d'un substrat piézo-électrique (11) ; de positionnement du dispositif de support cylindrique (16), lesdits disques de coupe abrasifs (14) étant adjacents à une surface dudit substrat (11) ; de rotation dudit dispositif de support cylindrique (16) à une vitesse relativement élevée ; et de translation du dispositif de support (16) et du substrat (11) l'un par rapport à l'autre de façon à découper, par l'action desdits disques de coupe abrasifs (14), une pluralité de cavités d'encre allongées, espacées, parallèles dans ledit substrat.

7. Procédé selon la revendication 6, dans lequel ladite étape d'exposition comprend l'exposition dudit revêtement (20) à un faisceau de haute énergie pour former chacune desdites gorges annulaires (28) avec un profil prédéterminé en pointe de sorte que chacun desdits disques de coupe (14) soit caractérisé par un profil en pointe inverse dudit profil prédéterminé.

8. Procédé selon la revendication 7, comprenant l'étape d'exécution d'un déplacement basculant relatif entre ledit dispositif de support de cylindre (16) et ledit faisceau optique de façon à former chacune desdites gorges annulaires (28) avec un profil sensiblement rectangulaire, de sorte que chacun desdits disques de coupe (14) soit également caractérisé par un profil sensiblement rectangulaire.

9. Procédé selon l'une quelconque des revendications 6 à 8, dans lequel ladite étape de revêtement comprend le revêtement d'au moins une partie dudit dispositif de support cylindrique (16) avec ledit mélange jusqu'à une profondeur dépassant la profondeur desdites gorges annulaires (28) formées à l'intérieur.

10. Procédé selon l'une quelconque des revendications 6 à 9, dans lequel ladite étape d'exposition comprend le déplacement dudit faisceau optique et dudit dispositif de support cylindrique (16) l'un par rapport à l'autre selon une pluralité d'étapes le long de l'axe longitudinal dudit dispositif de support pour former ladite pluralité de gorges annulaires (28).

11. Procédé selon l'une quelconque des revendications 6 à 9, dans lequel ladite étape d'exposition comprend l'érosion simultanée de ladite résine par une pluralité de faisceaux laser à haute énergie (36) espacés le long de l'axe longitudinal dudit dispositif de support (16) pour former ladite pluralité de gorges annulaires (28).

12. Procédé selon l'une quelconque des revendications 6 à 11, incluant l'emploi d'un laser d'excision en tant que dit faisceau optique.

13. Outil de coupe abrasif (10) à utiliser dans la formation d'une pluralité de cavités d'encre dans une imprimante à jet d'encre, dans un procédé selon l'une quelconque des revendications précédentes l'outil de coupe (10) comprenant un dispositif de support cylindrique (16) recouvert d'un revêtement abrasif (20), une pluralité de gorges annulaires espacées (28) existant dans ledit revêtement abrasif (20), chaque paire de gorges successives définissant entre elles un disque de coupe abrasif (14) ayant une largeur correspondant à la largeur desdites cavités d'encre et une hauteur dépassant la profondeur de cavité.

14. Outil selon la revendication 13, dans lequel le pas desdits disques de coupe (14) correspond à un pas de cavité de 75 à 500 microns avec un certain nombre de passes de coupe multiple de 1 à 4.

15. Outil selon la revendication 13 ou la revendication 14, dans lequel ledit revêtement abrasif (20) comprend un mélange de poudre de diamant et de résine.
